# EUROPEAN PATENT APPLICATION

(11) **EP 1 168 220 A2**
(43) Date of publication of application: **02.01.2002**
(21) Application number: 01305317.8
(22) Date of filing: 19.06.2001
(51) Int. Cl.: G06F 17/60

(54) **Banner advertisement forming apparatus, banner advertisement forming method, and storage medium**

(30) Priority: 19.06.2000 JP 2000183039; 13.06.2001 JP 2001177841
(71) Applicant: Sony Computer Entertainment Inc., Tokyo 107-0052 (JP)
(72) Inventor: Amano, Takaaki, Sony Music Communications Co., Shinjuku-ku, Tokyo 162-0845 (JP); Maeda, Yoshiharu, Sony Music Communications Co., Shinjuku-ku, Tokyo 162-0845 (JP)
(74) Representative: Turner, James Arthur

(57) **Abstract**

A banner advertisement forming apparatus 2 accepts banner advertisement forming information required to form a banner advertisement from a banner advertisement managing apparatus 1 connected via a network 3. Upon receipt of a banner advertisement forming command, the banner advertisement forming apparatus 2 forms a banner advertisement based upon the stored banner advertisement forming information. A sponsor may instruct the banner advertisement managing apparatus 1 to form the banner advertisement in a simple manner.

## Description

The present invention is related to a technique capable of forming/managing banner advertisements,

Since computer networks are popularized very recently, Web pages may constitute very important advertisement media, While any persons who open Web pages collect sponsors, advertisements called as "banner advertisements" related to sponsors are usually described on Web pages so as to compensate for investments paid by these sponsors, Since so-called "banner advertisements" may be moved to sites opened by sponsors upon receipt of clicking operations, these sponsors are tried to form such attractive banner advertisement for banner advertisement viewers by employing such a manner that, for instance, moving pictures are used as these banner advertisements, and/or conspicuous designs are applied to these banner advertisements.

In general, when the same banner advertisement is continuously used for a long time period, viewers of banner advertisements are bored with such a same banner advertisement, so that the reaction ratio of viewers is lowered. Therefore, there is such a case that sponsors regularly change designs and the like of these banner advertisements.

Also, since banner advertisements uniformly display the same advertisement with respect to all of viewers, there is another case. That is, for instance, while sponsors may suppose taste and generations of users who view each of Web pages on which these banner advertisements are described, the sponsors may advertise such banner advertisements having designs suitable for these Web pages.

However, such an operation that the designs of these banner advertisements are periodically changed so as to newly form banner advertisements may give heavy work loads to sponsors. Therefore, it is desirable to develop such a novel technique capable of forming banner advertisements in a simple manner.

On the other hand, the operation such that the banner advertisements are changed every Web page so as to be described cannot always give correct assumptions for the viewers of these Web pages. Also, it is practically difficult to change the designs of the banner advertisements with respect to the Web pages which are widely viewed by many users, while supposing the Web page viewers. As a result, it is also desired to develop such a novel technique capable of changing designs of banner advertisements to display the changed advertisement designs with respect to not each of Web pages, but each of user layers.

Various respective aspects and features of the invention are defined in the appended claims.

Embodiments of the present invention can provide a technique capable of instructing a formation of a banner advertisement by a sponsor in a simple manner. Another object of the present invention is to provide such a technique capable of changing a banner advertisement to be displayed in response to an attribute of a viewer of the banner advertisement.

To solve or at least alleviate the above-described problem, a banner advertisement forming apparatus, according to an aspect of the present invention, is featured by such a banner advertisement forming apparatus connected via a network to a banner advertisement managing apparatus, comprising; banner advertisement forming information accepting means for accepting banner advertisement forming information required to form a banner advertisement from the banner advertisement managing apparatus; and storage means for storing thereinto the accepted banner advertisement forming information.

Also, a banner advertisement forming apparatus, according to another aspect of the present invention, is featured by such a banner advertisement forming apparatus for forming a banner advertisement displayed on a banner advertisement viewing apparatus connected thereto via a network, comprising: banner advertisement forming information storage means for storing thereinto banner advertisement forming information required to form the banner advertisement in relation to banner advertisement identification information used to identify the banner advertisement forming information; personal information/attribute storage means for storing thereinto personal information and an attribute in relation to each other; attribute/identification information storage means for storing thereinto the attribute and the banner advertisement identification information in relation to each other; personal information accepting means for accepting personal information of a user of the banner advertisement viewing apparatus; and banner advertisement forming means for forming a banner advertisement based upon banner advertisement forming information in such a manner that upon receipt of the personal information, an attribute related to the accepted personal information is extracted; banner advertisement identification information related to the extracted attribute is extracted; and the banner advertisement forming information is related to the extracted banner advertisement identification information.

The invention will now be described by way of example with reference to the accompanying drawings, throughout which like parts are referred to by like references, and in which:
Fig. 1 is a diagram for explaining a concept of a banner advertisement forming/managing system to which the present invention is applied.
Fig. 2 is a schematic structural diagram of a banner advertisement managing apparatus 1 indicated in Fig. 1.
Fig. 3 is a schematic structural diagram of a banner advertisement forming apparatus 2 indicated in Fig. 1.
Fig. 4 is a diagram for explaining a construction of an element data file.
Fig. 5 is a diagram for explaining a construction of a template data file.
Fig. 6 is a diagram for describing a structure of a display format data file.
Fig. 7 is a flow chart for describing such a process operation that the banner advertisement forming apparatus 2 accepts an instruction issued from the banner advertisement managing apparatus 1 so as to store information used to produce a banner advertisement.
Fig. 8 is a diagram for representing an example of a pattern instruction screen.
Fig. 9 is a diagram for showing an example of an element data register screen.
Fig. 10 is a diagram for representing an example of a template selection screen.
Fig. 11 is a diagram for showing an example of a display mode instruction screen.
Fig. 12 is a flow chart for explaining such a process operation that a banner advertisement automatic producing unit automatically produces a banner advertisement.
Fig. 13 is a diagram for schematically explaining an application example of a banner advertisement forming/managing system.
Fig. 14 is a schematic structural diagram of a banner advertisement forming apparatus 2 shown in Fig. 13.
Fig. 15 is a diagram for explaining a structure of an attribute judgement table.
Fig. 16 is a diagram for explaining a structure of an attribute pattern correspondence table.
Fig. 17 is a schematic structural diagram of a banner advertisement viewing apparatus 4 shown in Fig. 13.
Fig. 18 is a flow chart for explaining a process operation in which the banner advertisement forming apparatus 2 accepts an instruction issued from the banner advertisement managing apparatus 1 so as to store information used to produce a banner advertisement in connection with an attribute of a user who views the banner advertisement.
Fig. 19 is a diagram for indicating an example of a banner advertisement expanding method designation screen.
Fig. 20 is a flow chart for explaining a process operation that the banner advertisement forming apparatus 2 forms a banner advertisement in response to an attribute of a user of the banner advertisement viewing apparatus 4.
Fig. 21 is a diagram for indicating an example of a personal information input screen.

A description will now be made of an embodiment of the present invention.

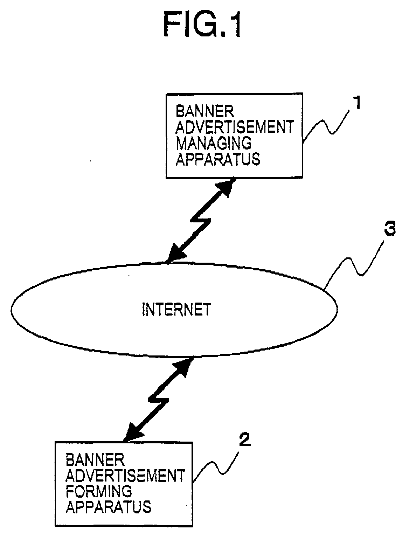

Fig. 1 is a diagram for schematically showing a conceptional idea of a banner advertisement forming/managing system to which the present invention is applied.

As indicated in this drawing, the banner advertisement forming/managing system, according to this embodiment mode, is arranged in such a manner that a banner advertisement managing apparatus 1 is connected via the Internet 3 to a banner advertisement forming apparatus 2.

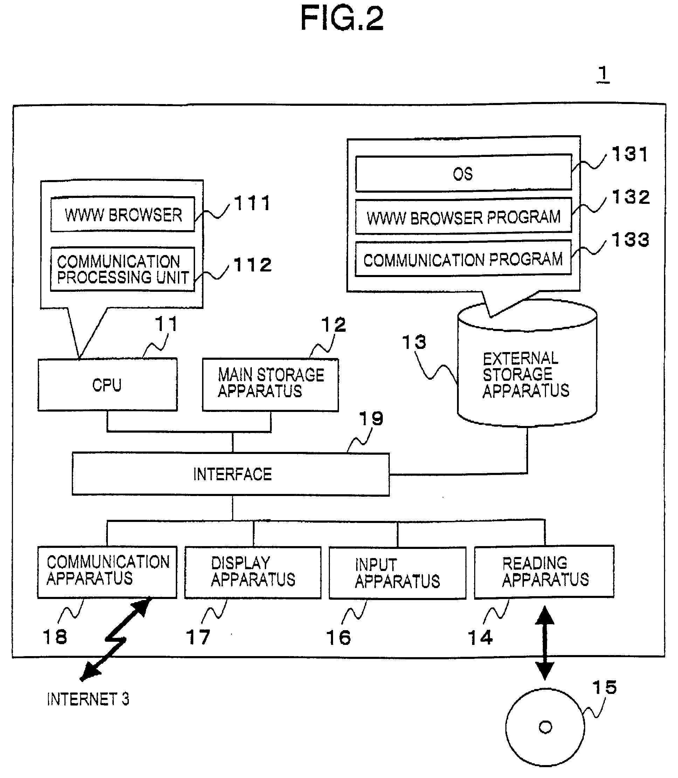

Fig. 2 is a structural diagram for schematically indicating the banner advertisement managing apparatus 1 shown in Fig. 1.

As indicated in this drawing, the banner advertisement managing apparatus 1 may be constituted on such an information processing apparatus having a general-purpose construction. That is, the information processing apparatus is provided with a CPU 11, a main storage apparatus 12, an external storage apparatus 13 such as a hard disk apparatus, a reading apparatus 14, an input apparatus 16 such as a keyboard and a mouse, a display apparatus 17 such as a display, a communication apparatus 18, and an interface 19. The reading apparatus 14 reads out a program, data, and the like from a storage medium 15 having a portability characteristic such as a CD-ROM and a DVD-ROM. The communication apparatus 18 communicates with the banner advertisement forming apparatus 2 via the Internet 3, The interface 19 may interface a data transmission/reception among the above-explained respective structural elements.

Into the external storage apparatus 13, an OS (Operating System) 131 capable of totally controlling the operations of the information processing apparatus, a WWW browser program 132, and a communication program 133 are stored. Apparently, other programs and the like may be stored into this external storage apparatus 13, if necessary.

The CPU 11 loads both the WWW browser program 132 and the communication program 133 on the main storage apparatus 12, and executes these programs. As a result, the CPU 11 constructs both a WWW browser 111 and a communication processing unit 112 on the information processing apparatus.

The WWW browser 111 views HTML formatted data (Web page and the like) which is opened by the banner advertisement forming apparatus 2, while utilizing HTTP (Hyper Text Transfer Protocol).

The communication processing unit 112 controls the communication apparatus 18 in order that the WWW browser 111 processes various sorts of protocols, for instance, PPP and TCP/IP, which are required to communicate with the banner advertisement forming apparatus 2.

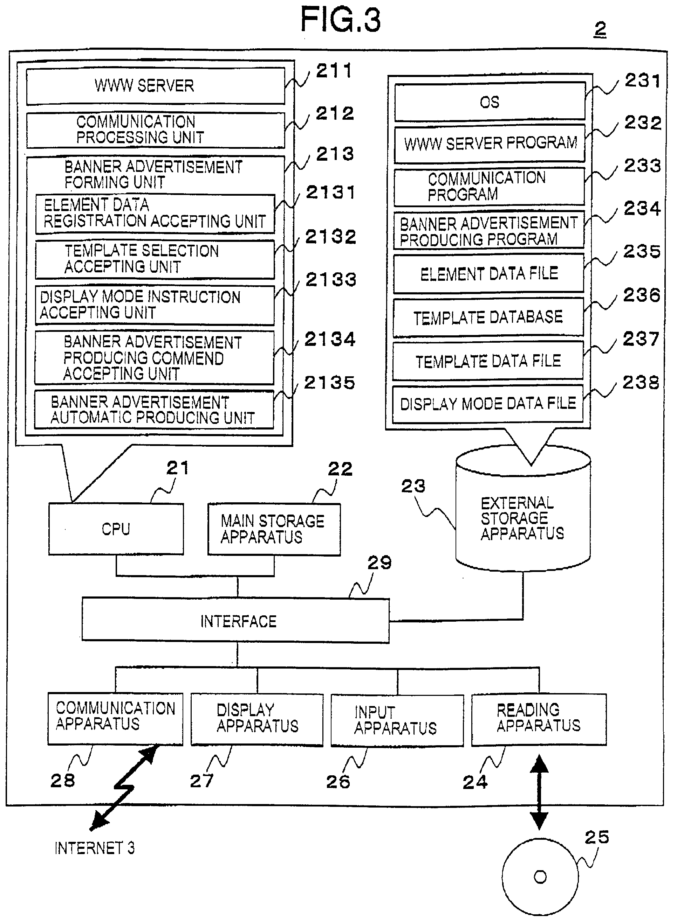

Fig. 3 is a schematic structural diagram of the banner advertisement forming apparatus 2 indicated in Fig. 1.

As indicated in this drawing, the banner advertisement forming apparatus 2 may be constituted on such an information processing apparatus having a general-purpose construction. That is, the information processing apparatus is provided with a CPU 21, a main storage apparatus 22, an external storage apparatus 23 such as a hard disk apparatus, a reading apparatus 24, an input apparatus 26 such as a keyboard and a mouse, a display apparatus 27 such as a display, a communication apparatus 28, and an interface 29. The reading apparatus 24 reads out a program, data, and the like from a storage medium 25 having a portability characteristic such as a CD-ROM and a DVD-ROM, The communication apparatus 28 communicates with the banner advertisement managing apparatus 1 via the Internet 3. The interface 29 may interface a data transmission/reception among the above-explained respective structural elements.

Into the external storage apparatus 23, an OS (Operating System) 231 capable of totally controlling the operations of the information processing apparatus, a WWW server program 232, a communication program 233, a banner advertisement forming program 234, an element data file 235, a template database 236, a template data file 237, and a display mode data file 238 are stored. Apparently, other programs and the like may be stored into this external storage apparatus 23, if necessary.

The CPU 21 loads the WWW server program 232, the communication program 233, and the banner advertisement forming program 234 on the main storage apparatus 212, and executes these programs. As a result, the CPU 21 constructs a WWW server 211, a communication processing unit 212, and a banner advertisement forming unit 213 on an information processing apparatus.

The WWW server 211 opens data made of the HTML format in such a manner that this HTML-formatted data may be viewed by using the protocol of HTTP by the WWW browser 111 of the banner advertisement managing apparatus 1.

The communication processing unit 212 controls the communication apparatus 28 so as to process various sorts of protocol which are required by that the WWW server 211 and the banner advertisement forming unit 213 communicate the banner advertisement managing apparatus 1.

The banner advertisement forming unit 213 owns an element data registration accepting unit 2131, a template selection accepting unit 2132, a display mode instruction accepting unit 2133, a banner advertisement producing command accepting unit 2134, and a banner advertisement automatic producing unit 2135.

The element data registration accepting unit 2131 accepts registration of element data corresponding to a display element of a banner advertisement in response to an instruction issued from the banner advertisement managing apparatus 1. In this case, as a display element of a banner advertisement, for example, there are a text, a logo, a goods image, and the like, which are represented in a banner advertisement. The element data registration accepting unit 2131 records the accepted element data in an element data file 235. The element data registration accepting unit 2131 may accept a plurality of element data, and may apply pattern numbers to the accepted plural element data so as to manage these element data with the pattern numbers.

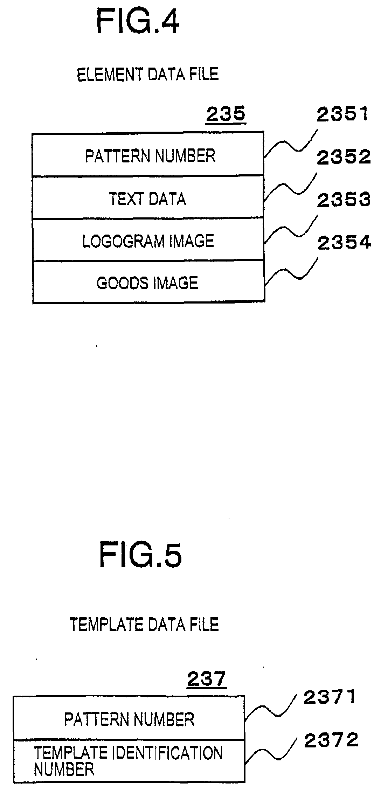

As indicated in Fig. 4, the element data file 235 is provided with storage areas which are used to store thereinto a pattern number 2351, text data 2352, image data 2353 of a logo, data 2354 of a goods image.

In response to an instruction issued from the banner advertisement managing apparatus 1, the template selection accepting unit 2132 accepts a selection of a template used to determine both an outer shape of a banner advertisement and an arrangement of element data. This template data is previously registered in the template database 236. The template selection accepting unit 2132 records the information related to the accepted template in the template data file 237. The template selection accepting unit 2132 may accept a plurality of template data, and may apply pattern numbers to the accepted template data so as to manage these template data with the pattern numbers.

As shown in Fig. 5, the template data file 237 is provided with such a storage areas used to store thereinto a pattern number 2371, and information 2372 related to a selection-accepted template (namely, identification number of template).

The display mode instruction accepting unit 2133 accepts an instruction of a display mode of a banner advertisement from the banner advertisement managing apparatus 1. In this case, as a banner advertisement display mode, for instance, there are a size of a banner advertisement, a color of a banner advertisement, a font of a text displayed on a banner advertisement, a size thereof, a color thereof, and the like. The display mode instruction accepting unit 2133 records information related to an accepted display mode into the display mode data file 238.

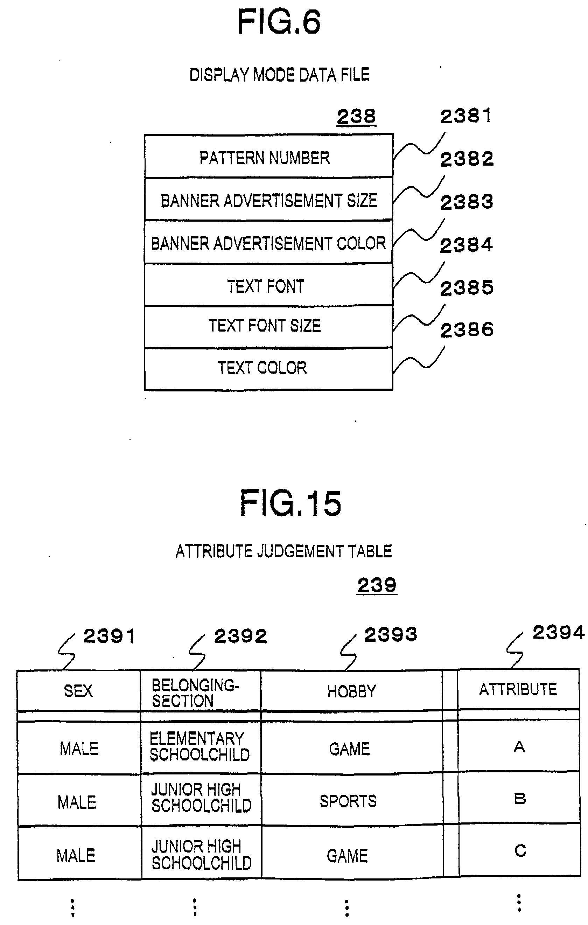

As indicated in Fig. 6. the display mode data file 238 is provided with such storage areas which are used to store thereinto a pattern number 2381, information 2382 related to a size of a banner advertisement, information 2383 related to a color of a banner advertisement, information 2384 related to a font of a text, information 2385 related to a font size of a text, and information 2386 related to a color of a text.

Next, a description will now be made of operations of the banner advertisement forming/managing system with employment of the above-described arrangements.

In this embodiment mode, the banner advertisement forming/managing system executes a process operation for storing such information that the banner advertisement forming apparatus 2 accepts an instruction issued from the banner advertisement managing apparatus 1 to thereby produce a banner advertisement, and also executes such a process operation that the banner advertisement forming apparatus 2 accepts a request for producing a banner advertisement so as to form a banner advertisement.

A first description is made of such a process operation that the banner advertisement forming apparatus 2 accepts the instruction issued from the banner advertisement managing apparatus 1 so as to store the information which is used to produce the banner advertisement.

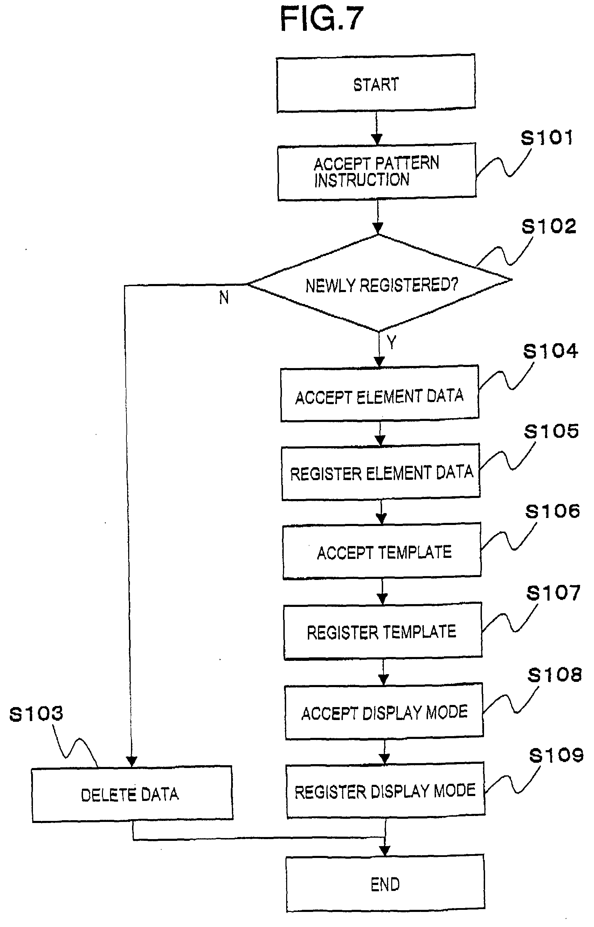

Fig. 7 is a flow chart for explaining the operations of the banner advertisement forming apparatus 2 in this time.

Upon receipt of an access of the banner advertisement managing apparatus 1 via the communication processing unit 212, the WWW server 211 causes the WWW browser 111 of the banner advertisement managing apparatus 1 to view a Web page.

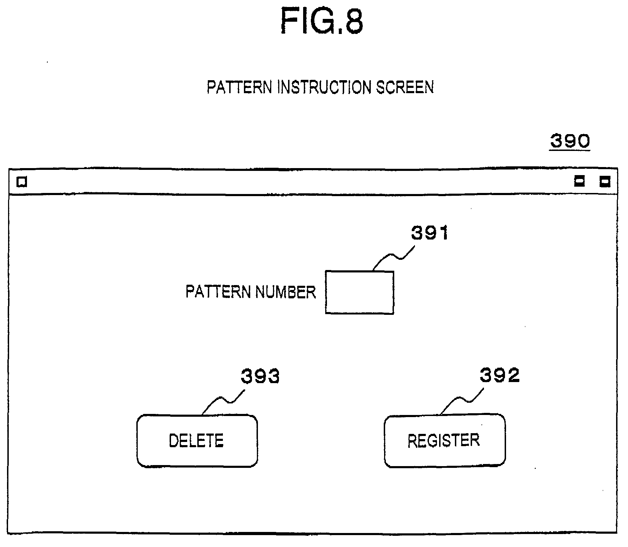

First, the WWW server 211 represents such a pattern instruction image 390 as shown in Fig. 8 as one example to the WWW browser 111 (step S101). As indicated in this drawing, this pattern instruction screen 390 is provided with an area 391 used to enter a pattern number, a new registration button 392, and a deletion button 393.

On this pattern instruction screen 390, while a banner advertisement requesting person who corresponds to a user of the banner advertisement managing apparatus 1 employs an input apparatus 16, this banner advertisement requesting person may input a numeral value into the pattern number input area 391, and may click any one of the new registration button 392 and the deletion button 393. In other words, in the case that such information as element data and template data required to produce a banner advertisement is newly registered, the banner advertisement requesting person may input a pattern number for identifying this newly registering information into the pattern number input area 391 by employing the keyboard and the like, and may click the new registration button. On the other hand, in the case that such previously registered information required to produce the banner advertisement is wanted to be deleted, the banner advertisement requesting person may input a pattern number for identifying this deletion-required information into the pattern number input area 391 by employing the keyboard and the like, and may click the deletion button 393.

The WWW server 211 performs the below-mentioned process operations in response to buttons accepted by this WWW server 211 (step S102).

Upon receipt of clicking operation of the deletion button 393, the WWW server 211 deletes such data corresponding to the patterns 2351, 2371, 2381 from the data which are recorded in the element data file 235, the template data file 237, and the display mode data file 238 (S103). These patterns 2351, 2371, and 2381 correspond to the numeral values entered into the pattern number input area 291.

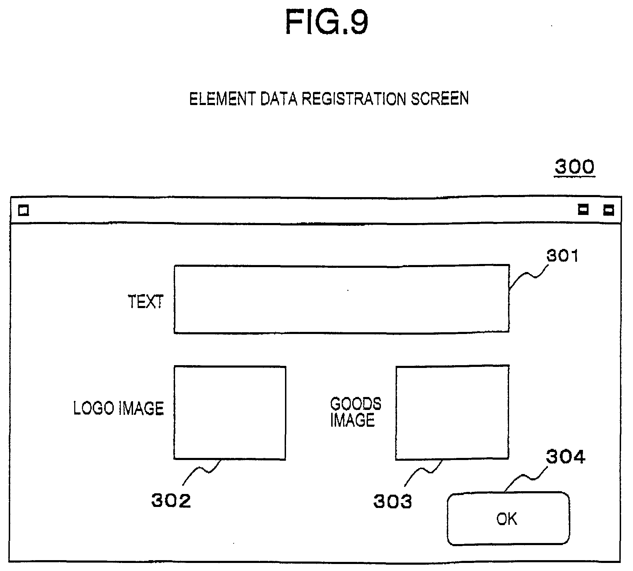

Upon receipt of clicking operation of the new registration button 392, the WWW server 211 stores the entered numeral value into the pattern number input region 391, and also represents such an element data registration screen 300 as indicated in Fig. 9 as one example to the WWW browser 111 (S104). As represented in this drawing, this element data registration screen 300 is provided with a text registering area 301, a logo registering area 302, a goods image registering area 303, and an OK button 304.

The text registering area 301 may accept text data, whereas both the logo registering area 302 and the goods image registering area 303 may accept image data having the format of GIF (Graphics Interchange Format) or the like.

On this element data registering screen 300, the banner advertisement requesting person who corresponds to the user of the banner advertisement managing apparatus 1 may enter data into the respective areas by employing the input apparatus 16, In other words, the banner advertisement requesting person may input such text data which is wanted to be displayed on the banner advertisement by manipulating, for example, the keyboard into the text registering area 301. Also, image data which is formed by executing, for example, graphics forming software and the like may be pasted into both the logo registering area 302 and the goods image registering area 303.

When the banner advertisement requesting person inputs the data into these regions, this banner advertisement requesting person may register the element data by clicking the OK button 304. In other words, upon receipt of clicking operation of the OK button 304, the WWW browser 111 transmits a data group to the WWW server 211 by employing the communication processing unit 112 in combination with such information indicating the acceptance of the OK button 304. This data group is inputted into the text registering area 301, the logo registering area 302, and the goods image registering area 303.

The element data registration accepting unit 2131 accepts via the WWW server 211 the data group which is inputted into the text registering area 301, the logo registering area 302, and the goods image registering area 303, This element data registration accepting unit 2131 records these data into the element data file 235 in relation to the pattern numbers which have already been accepted (S105).

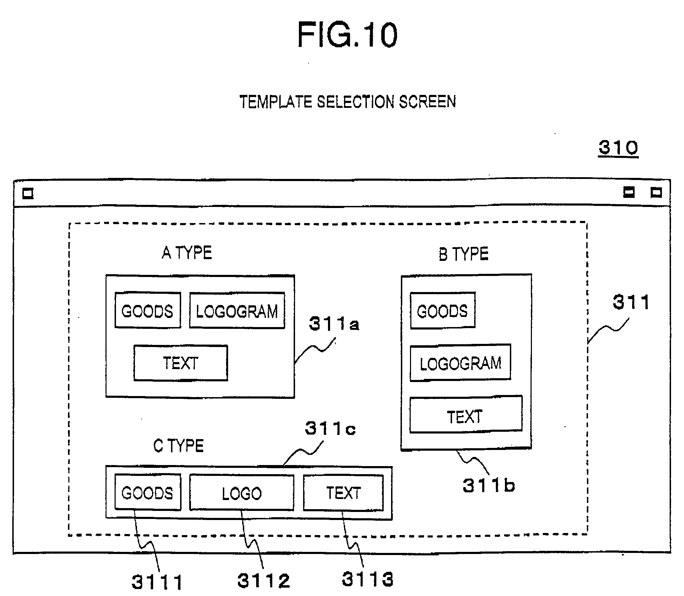

The WWW server 211 which receives the information as to the acceptance of the OK button 304 subsequently represents such a template selection screen 310 indicated in Fig. 10 as one example to the WWW browser 111 (S106). As shown in this drawing, this template selection screen 310 is provided with an area 311 which shows a list of templates. In this area 311 showing the list of the templates, an image indicative of a template A type 311a, an image indicative of a template B type 311b, and an image indicative of a template C type 311c. In this case, the respective templates A to C types own the specific shapes thereof, and a positional relationship among a text 3111, a logo image 3112, and a goods image 3113 (template "C" is typically shown in this drawing). It should be noted that these template images are previously recorded in the template database 236 in relation to the identification information thereof.

The banner advertisement requesting person who is equal to the user of the banner advertisement managing apparatus 1 may select any one of the images which indicate the type of the template on the template selection screen 310 by using the input apparatus 16. Concretely speaking, the banner advertisement requesting person may click the template images 311a to 311c indicative of such a layout which is wanted to be employed as the banner advertisement.

When the WWW browser 111 accepts clicking operation of any one of the template images, this WWW browser 111 transmits such identification information of this accepted template image to the WWW server 211 by using the communication processing unit 112. In this case, identification information may be determined as, for example, "T001" and "T002."

The template selection accepting unit 2132 which has accepted the identification information of the above-explained template image via the WWW server 211 records this data into the template data file 237 in relation to the previously accepted pattern number (S107).

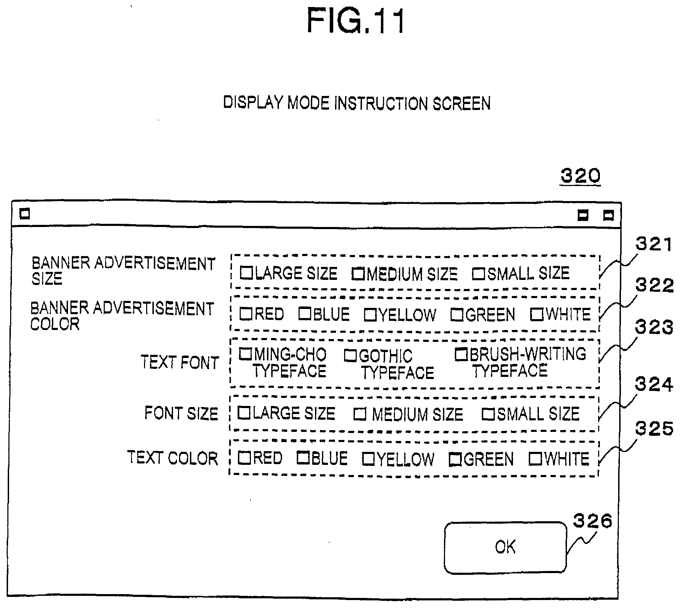

Next, the WWW server 211 represents such a display mode instruction screen 320 as shown in Fig. 11 as one example on the WWW browser 111 (S108). As shown in this drawing, this display mode instruction screen 320 is provided with a banner advertisement size selecting area 321, a banner advertisement color selecting area 322, a text font selecting area 323, a text font size selecting area 324, a text font color selecting area 325, and an OK button 326.

The banner advertisement size selecting area 321 contains a list of banner advertisement display sizes which are indicated by, for instance, a large size, a medium size, and a small size, or a total number of dots. The banner advertisement color selecting area 322 contains a color list of banner advertisements. Also, the text font selecting area 323 contains a list of text fonts. The text font size selecting area 324 contains a list of text font sizes. Then, the text font color selecting area 325 contains a color list of text fonts.

The banner advertisement requesting person who corresponds to the user of the banner advertisement managing apparatus 1 may instruct a display mode of a banner advertisement on the banner advertisement display mode instruction screen 320 by using the input apparatus 16. Concretely speaking, the banner advertisement requesting person may click a check box 3211 indicative of a display size which is wanted to be employed from the display sizes indicated in the banner advertisement size selecting area 321. Similarly, the banner advertisement requesting person may select a color of a banner advertisement, a font of a text indicated on a banner advertisement, a text font size, and a color of a text font by clicking relevant check boxes.

When the banner advertisement requesting person selects an item from these areas, this banner advertisement requesting person can register the display mode by clicking the OK button 326. In other words, when the WWW browser 111 accepts clicking operation of the OK button 326, the WWW browser 111 transmits to the WWW server 211 by employing the communication processing unit 112, the identification information of such items which are selected based upon the banner advertisement size selecting area 321, the banner advertisement color selecting area 322, the text font selecting area 323, the text font size selecting area 324, and the text font color selecting area 325 in combination with such information indicating the acceptance of the OK button 326.

The display mode instruction accepting unit 2133 which has accepted via the WWW server 211 the identification information of such items which are selected based upon the banner advertisement size selecting area 321, the banner advertisement color selecting area 322, the text font selecting area 323, the text font size selecting area 324, and the text font color selecting area 325, will record these data into the display mode data file 238 in connection with the previously accepted pattern numbers (S109).

As a consequence, the banner advertisement requesting person can issue such an instruction related to the design of the banner advertisement in such a simple manner by utilizing a Web page.

Alternatively, it should be noted that while the banner advertisement forming apparatus 2 may be equipped with the browser function, the banner advertisement forming apparatus 2 itself may accept the information used to produce the banner advertisement. In this alternative case, while each of the above-explained Web page screens is represented on the display apparatus 27 of the banner advertisement forming apparatus 2, such information corresponding to an operation accepted on the Web page is recorded on the element data file 235, and the like.

As previously described, such a process operation has been explained. That is, the banner advertisement forming apparatus 2 accepts the instruction issued from the banner advertisement managing apparatus 1, and stores the information used to produce the banner advertisement.

Next, a description will now be made of such process operations that the banner advertisement forming apparatus 2 accepts a request of forming a banner advertisement so as to form such a banner advertisement.

A banner advertisement production command accepting unit 2134 may accept a banner advertisement production command which is issued from another function unit, e.g., the WWW server 211 provided in the banner advertisement forming apparatus 2, or issued from another apparatus connected via a network to the banner advertisement forming apparatus 2. This may be realized by that a server function capable of providing an application service is given to the banner advertisement production command accepting unit 2134. It should be noted that the banner advertisement production command contains such information related to a pattern instruction. This pattern instruction instructs which pattern is used among the registered patterns.

The banner advertisement production command accepting unit 2134 which accepts the banner advertisement production command notifies such a message that the banner advertisement production command is accepted to a banner advertisement automatic producing unit 2135 inclusive of the information related to the pattern instruction.

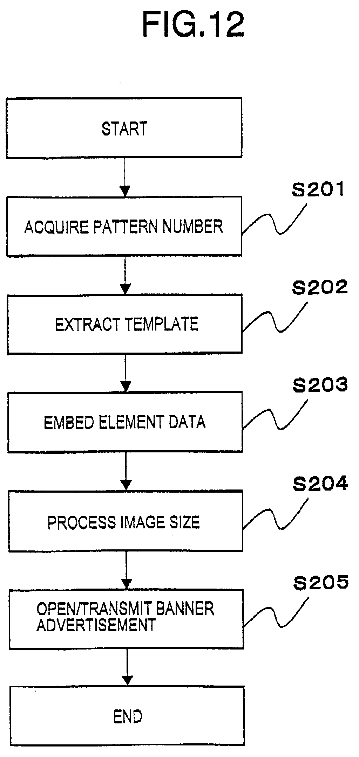

Upon receipt of the above-explained notification, the banner advertisement automatic producing unit 2135 automatically produces a banner advertisement by executing the below-mentioned process operation. Fig. 12 is a flow chart for explaining operations when this process operation is carried out.

The banner advertisement automatic producing unit 2135 acquires data as to a pattern number relevant to a pattern instruction from data which are recorded in the element data file 235, the template data file 237, and the display mode data file 238 with reference to these data files (S201). In this case, the acquired data will be referred to as element data, template data, and display mode data.

Next, while template identification information which is stored in the acquired template data is used as a key, the banner advertisement automatic producing unit 2135 extracts the relevant template from the template database 236 (S202). Then, this banner advertisement automatic producing unit 2135 embeds a text, a Iogo, and a goods image, which are recorded in the acquired element data, into a predetermined position of this relevant template (S203).

At this time, when the text is embedded, while the banner advertisement automatic producing unit 2135 uses the font recorded in the text font data 2381 of the acquired display mode data, this text data may be embedded with the size recorded in the text font size data 2382 and the color recorded in the font text color data 2383, so that an original figure of the banner advertisement is formed.

Then, the banner advertisement automatic producing unit 2135 executes a process operation of image enlargement/image compression on the original figure of the formed banner advertisement in response to the size of the acquired display mode data (S204), so that the banner advertisement is accomplished.

The banner advertisement automatic producing unit 2135 opens and/or transmits the image data of the completed banner advertisement with respect to the function unit, or other apparatus for issuing the banner advertisement production command request (S205), so that the banner advertisement automatic producing process operation is ended.

As a result, such a banner advertisement can be automatically produced based upon the instruction of the banner advertisement request person.

The automatically produced banner advertisement is displayed on a predetermined position of a Web page used to advertise this automatically produced banner advertisement, while a link to a site of the banner advertisement request person is established. As to this Web page, since the banner advertisement production is required for the banner advertisement forming apparatus 2 every time the display request is accepted, in such a case that the banner advertisement request person updates the information used to produce the banner advertisement from the banner advertisement managing apparatus 1, the content of this information change may be directly reflected on such a banner advertisement described on the Web page.

Next, an application example of the banner advertisement forming/managing system according to this embodiment mode will now be explained.

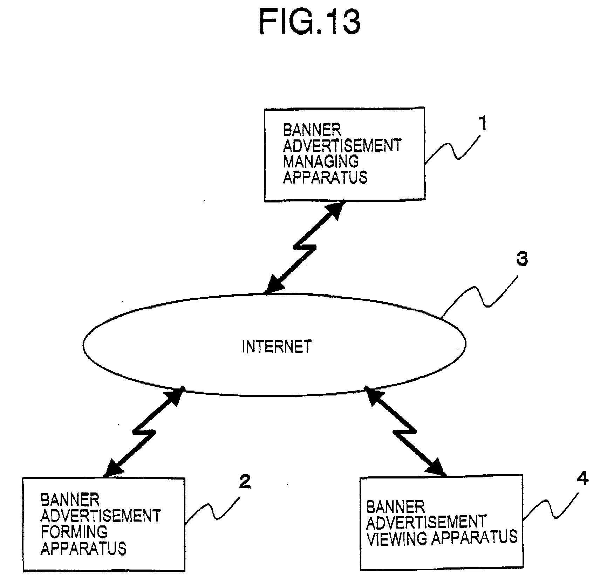

Fig. 13 schematically shows a conceptional arrangement of this embodiment.

As shown in this drawing, this embodiment mode is arranged by that a banner advertisement viewing apparatus 4 is connected via the Internet 3 to the above-explained banner advertisement forming/managing system. Since the banner advertisement forming/managing system is similar to that of the above-explained example, a different point is mainly explained in this application example.

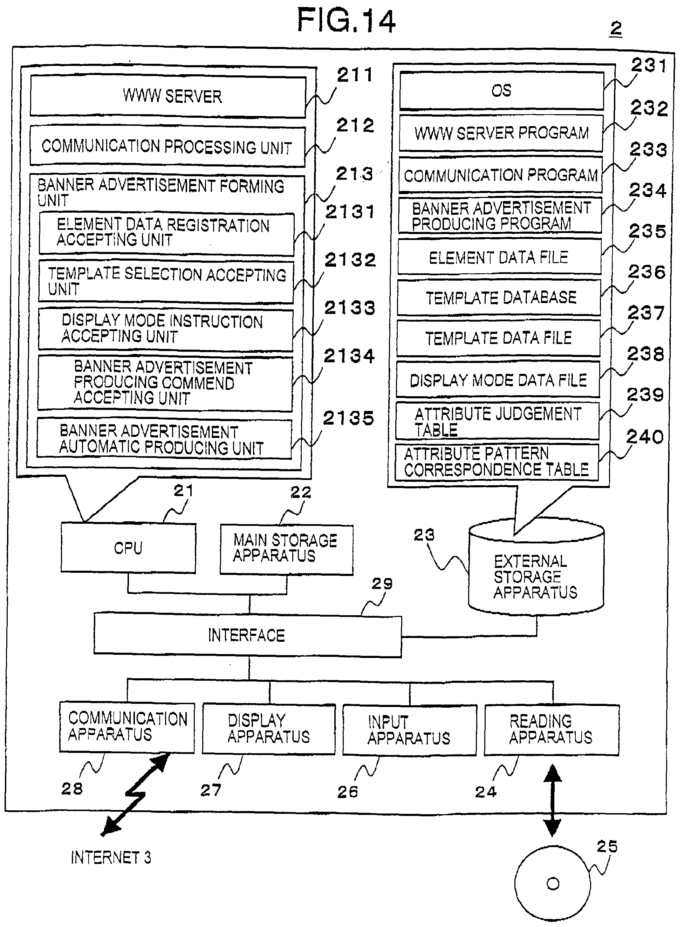

Fig. 14 is a schematic structural diagram of the banner advertisement forming apparatus 2 shown in Fig. 13.

As indicated in this drawing, in addition to the arrangement of Fig. 3, the banner advertisement forming apparatus 2 is so arranged that both an attribute judgement table 239 and an attribute pattern correspondence table 240 are stored in the external storage apparatus 23.

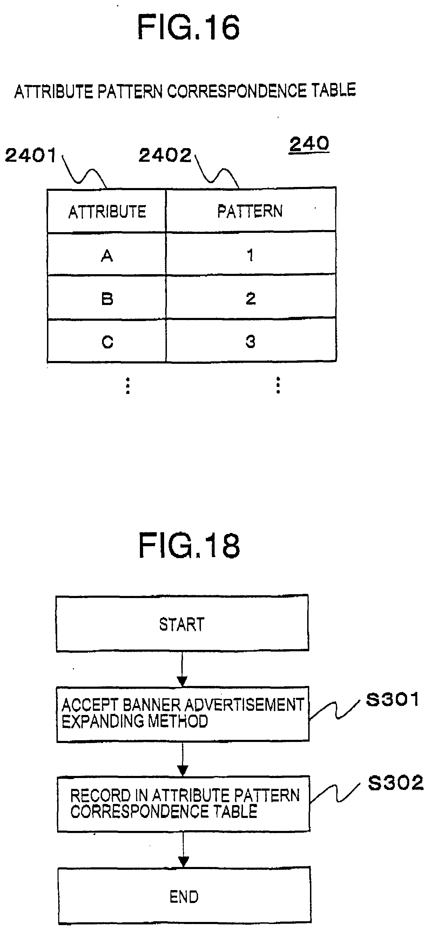

As indicated in Fig. 15, the attribute judgement table 239 stores thereon such a rule that an attribute 2304 is judged based upon a combination among a sex 2391, a belonging section 2392, and a hobby 2393. For instance, in the case that the sex is "male", the belonging section is "primary schoolchild", and the hobby is "game", this attribute is judged as an attribute "A." It is so assumed that this table is previously formed.

As indicated in Fig. 16, the attribute pattern correspondence table 240 is such a table in which the attribute 2401 is made in correspondence with a pattern number 2402.

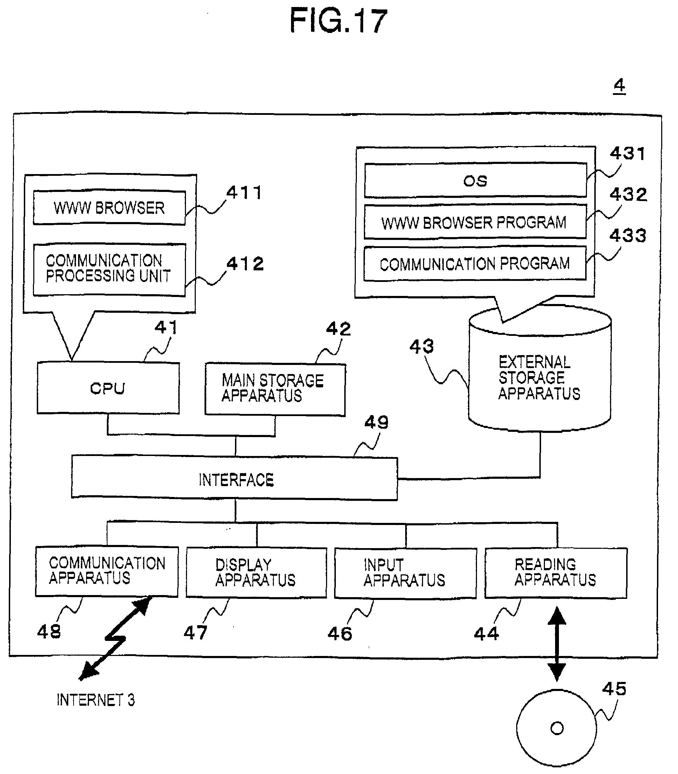

Fig. 17 is a schematic structural diagram of the banner advertisement viewing apparatus 4 shown in Fig. 13.

As indicated in this drawing, the banner advertisement viewing apparatus 4 may be constituted on such an information processing apparatus having a general-purpose construction. That is, the information processing apparatus is provided with a CPU 41, a main storage apparatus 42, an external storage apparatus 43 such as a hard disk apparatus, a reading apparatus 44, an input apparatus 46 such as a keyboard and a mouse, a display apparatus 47 such as a display, a communication apparatus 48, and an interface 49. The reading apparatus 44 reads out data from a storage medium 45 having a portability characteristic such as a CD-ROM and a DVD-ROM. The communication apparatus 48 communicates with the banner advertisement forming apparatus 2 via the Internet 3. The interface 49 may interface a data transmission/reception among the above-explained respective structural elements.

Into the external storage apparatus 43, an OS (Operating System) 431 capable of totally controlling the operations of the information processing apparatus, a WWW browser program 432, and a communication program 433 are stored. The OS 431 is loaded on the main storage apparatus 42 and executed by the CPU 41 when the information processing apparatus is initiated.

The CPU 41 loads both the WWW browser program 432 and the communication program 433 on the main storage apparatus 42, and executes these programs. As a result, the CPU 41 constructs both a WWW blower 411 and a communication processing unit 412 on the information processing apparatus.

The WWW browser 411 views HTML formatted data (Web page and the like) which is opened by the banner advertisement forming apparatus 2, while utilizing the protocol of HTTP (Hyper Text Transfer Protocol).

The communication processing unit 412 controls the communication apparatus 48 in order that the WWW browser 411 processes various sorts of protocols, for instance, PPP and TCP/IP, which are required to communicate with the banner advertisement forming apparatus 2.

It should also be noted that a construction of the banner advertisement managing apparatus 1 is similar to that of the previous embodiment.

Next, a description will now be made of operations of the banner advertisement forming/managing system with employment of the above-explained arrangement.

In this embodiment, in accordance with the banner advertisement forming/managing system, upon receipt of an instruction issued from the banner advertisement managing apparatus 1, the banner advertisement forming apparatus 2 performs such a process operation that information used to form a banner advertisement is stored in relation to an attribute (for example, sex, age, taste) of a user who views a banner advertisement; and the banner advertisement forming apparatus 2 executes such a process operation that a banner advertisement is formed in correspondence with the attribute of the user of the banner advertisement viewing apparatus 4.

First, a description will now be made of such a process operation that the banner advertisement forming apparatus 2 accepts the instruction issued from the banner advertisement managing apparatus 1, and stores the information used to produce the banner advertisement in relation to the attribute of the user who views the banner advertisement.

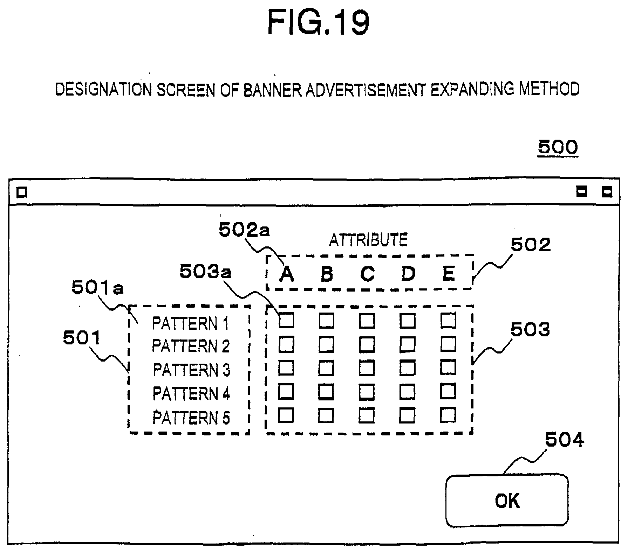

Fig. 18 is a flow chart for explaining operations of the banner advertisement forming apparatus 2 at this time.

When the WWW server 211 accomplishes the above-explained process operation for storing the information used to produce the banner advertisement, this WWW server 211 represents such a banner advertisement expanding method designation screen 500 as illustrated in Fig. 19 as one example to the WWW browser (S301). As indicated in the drawing, this banner advertisement expanding method designation screen 500 is provided with an area 501 for indicating a pattern number, an area 502 for showing a user (viewer of banner advertisement) attribute, a check box area 503, and an OK button 504. The check box area 503 is to instruct which pattern number is used with respect to the relevant user attribute.

In this case, the WWW server 211 extracts the pattern number which has been registered with reference to the element data file 235 prior to the representation of this screen, and displays the extracted pattern number on the pattern number display area 501.

As explained above, the attribute displayed in the user attribute display area are sectioned as follows. That is, while a plurality of groups (A group to E group in this example) are set, for instance, the attribute "A" is defined as [male, primary schoolchild, hobby is "game"]; the attribute "B" is defined as [male, junior high school boy, hobby is "sports"]; ---; the attribute "E" is defined as [others]. This sectioning way is defined as a rule which is recorded in the attribute judgement table 239.

A banner advertisement requesting person corresponding to a user of the banner advertisement managing apparatus 1 may input a check mark into the check box area 503 on this banner advertisement expanding method designation screen 500 by employing the input apparatus 16. Concretely speaking, in the case that a banner advertisement of a pattern 1 is wanted to be viewed with respect to an advertisement viewer of the attribute A, the banner advertisement requesting person clicks such a check box 503a located at a position where the attribute "A" 502a crosses the pattern 1 (501a), so that the check mark can be entered.

Similarly, as to the respective attributes, the pattern numbers which are wanted to be viewed can be designated.

Then, when the instructions of the pattern numbers with respect to all of the attributes are accomplished, the OK button 504 may be clicked.

Upon receipt of clicking operation of the OK button 504, the WWW server 211 records the information related to the check marks inputted into the check box area 503 in the attribute pattern correspondence table 240 (S302).

The foregoing description is made of the process operation in which the banner advertisement forming apparatus 2 accepts the instruction issued from the banner advertisement managing apparatus 1, and then, stores the information used to produce the banner advertisement and the attribute of the user who views the banner advertisement in relation to each other.

Next, a description will now be made of a process operation such that the banner advertisement forming apparatus 2 forms a banner advertisement in response to an attribute of a user of the banner advertisement viewing apparatus 4.

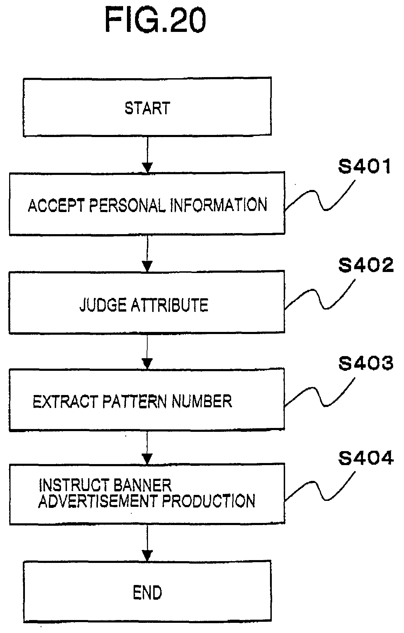

Fig. 20 is a flow chart for explaining operations executed by the banner advertisement forming apparatus 2 at this stage.

When WWW server 211 accepts an access of the banner advertisement viewing apparatus 4 via the communication processing unit 212, this WWW server 211 causes the WWW browser 411 of the banner advertisement viewing apparatus 4 to view a Web page.

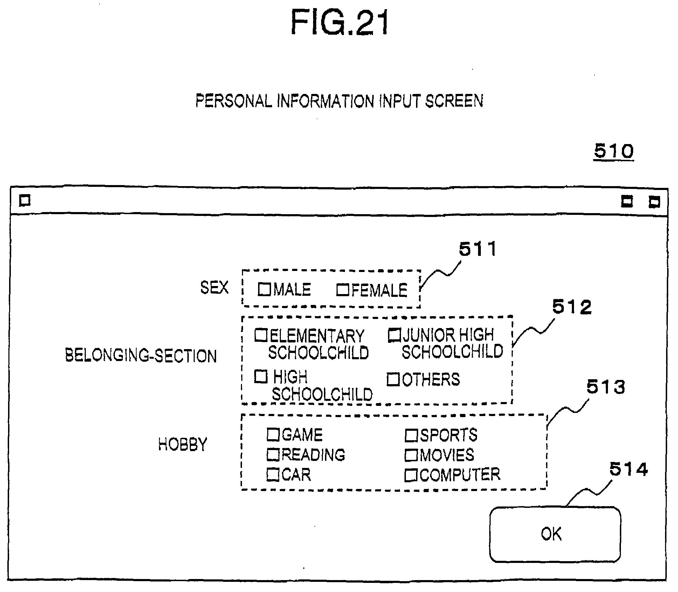

First, the WWW server 211 represents such a personal information input screen 510 as indicated in Fig. 21 as one example to the WWW browser 411 (S401). As indicated in this drawing, this personal information input screen 510 is provided with an area 511, an area 512 used to select a belonging section, an area 513 used to select a hobby, and an OK button 514. The area 511 is used to select a sex of a banner advertisement viewer who corresponds to the user of the banner advertisement viewing apparatus 4.

The advertisement viewer who corresponds to the user of the banner advertisement viewing apparatus 4 may designate the relevant selection tree on the personal information input screen 510 by employing the input apparatus 46. Concretely speaking, the banner advertisement viewer may click a check button indicative of the relevant selection tree as to each of the areas.

When the banner advertisement viewer accomplishes the designation of the selection tree, this banner advertisement viewer can click the OK button 514.

The WWW server 211 which accepts the clicking operation of the OK button 514 makes a judgement as to an attribute of the banner advertisement viewer based upon both the attribute judgement table 239, and also the various information with respect to the sex, the belonging section, and the hobby, which are inputted into the respective areas (S402).

Concretely speaking, the WWW server 211 retrieves such data within the attribute judgement table 239, which are made coincident with the sex, the belonging section, and the hobby, inputted into the respective areas. Then, the WWW server 211 recognizes such an attribute which is described in the extracted data as the attribute of the banner advertisement viewer.

Subsequently, the WWW server 211 extracts a pattern number of a banner advertisement from the attribute pattern correspondence table 240, while using the judged attribute as a key (S403).

Then, this WWW server 211 notifies such a production command to the banner advertisement production command accepting unit 2134 (S404). This production command contains the extracted pattern number as information related to the pattern instruction.

The banner advertisement production command accepting unit 2134 which accepts the above-explained production command executes the above-explained producing process operation of the banner advertisement in accordance with the sequentice described in Fig. 12. Then, the WWW server 211 displays the banner advertisement on the WWW browser 411 employed in the banner advertisement viewing apparatus 4 with reference to the image data of the produced banner advertisement.

As a result, it is possible to display such a banner advertisement in response to the attribute of the viewer of the banner advertisement.

It should be understood that the present invention is not limited only to the above-explained embodiments, but may be variously modified within the technical scope and spirit of the present invention.

For instance, in the above-explained example, the viewer of the banner advertisement inputs the personal information every time the viewer accesses the WWW server 211. To eliminate such a cumbersome operation, while a user registration is carried, both identification information of a viewer of a banner advertisement and personal information thereof may be registered into the WWW server 211. At this time, when a viewer of a banner advertisement accesses the WWW server 211, since the viewer inputs only the registered identification information, the WWW server 211 may specify the viewer of the banner advertisement, and thus, may judge the attribute of this viewer.

Alternatively, an attribute of a viewer (user) of a banner advertisement may be judged on a Web page where a banner advertisement is represented. In other words, in the case that the Web page describing the banner advertisement requests the banner advertisement forming apparatus 2 to form the banner advertisement, the attribute information of the user may be involved therein. To this end, on the site where the Web page describing the banner advertisement is managed, either a process operation for judging a user attribute or such information required for judging the user attribute is registered. Then, upon receipt of a request of viewing a Web page from a user, this Web page managing site may judge an attribute of this user, and may transmit a banner advertisement producing request to the banner advertisement forming apparatus 2 together with the attribute information.

The banner advertisement forming apparatus 2 which accepts this information may form such a banner advertisement in response to the attribute information of the user in accordance with the above-explained sequential operation, and represent the produced banner advertisement on such a Web page which describes the produced banner advertisement.

As previously described, in accordance with the present invention, the sponsor can issue the banner advertisement forming instruction in a simple manner. Also, the banner advertisement to be displayed can be changed in response to the attribute of the viewer of the banner advertisement.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A banner advertisement forming apparatus to be connected via a network to a banner advertisement managing apparatus, comprising:
banner advertisement forming information accepting means for accepting banner advertisement forming information required to form a banner advertisement from said banner advertisement managing apparatus; and
storage means for storing thereinto the accepted banner advertisement forming information.

2. A banner advertisement forming apparatus as claimed in claim 1 wherein:
said banner advertisement forming information contains:
character information to be displayed in the banner advertisement; and
image information to be displayed in the banner advertisement.

3. A banner advertisement forming apparatus as claimed in claim 2 wherein:
said banner advertisement forming information further contains:
arrangement information related to an arrangement relationship between said character information and said image information within the banner advertisement;
information related to a method of displaying said character information; and
information related to an outer shape of the banner advertisement and a color thereof.

4. A banner advertisement forming apparatus as claimed in claim 1 wherein:
said banner advertisement forming apparatus is further comprised of:
banner advertisement identification information accepting means accepting banner advertisement identification information used to identify said banner advertisement forming information from said banner advertisement managing apparatus; and
said storage means stores thereinto the accepted banner advertisement identification information in relation to said banner advertisement forming information.

5. A banner advertisement forming apparatus as claimed in claim 1, further comprising:
banner advertisement forming command accepting means for accepting a banner advertisement forming command; and
banner advertisement forming means for forming a banner advertisement based upon the banner advertisement forming information stored in the storage means upon receipt of the banner advertisement forming command.

6. A banner advertisement forming apparatus as claimed in claim 4, further comprising:
banner advertisement forming command accepting means for accepting a banner advertisement forming command containing the banner advertisement identification information; and
banner advertisement forming means for forming a banner advertisement based upon banner advertisement forming information which is stored into the storage means in relation to the banner advertisement identification information contained in the banner advertisement forming command upon receipt of said banner advertisement forming command.

7. A banner advertisement forming apparatus for forming a banner advertisement displayed on a banner advertisement viewing apparatus to be connected thereto via a network, comprising:
banner advertisement forming information storage means for storing thereinto banner advertisement forming information required to form the banner advertisement in relation to banner advertisement identification information used to identify said banner advertisement forming information;
personal information/attribute storage means for storing thereinto personal information and an attribute in relation to each other;
attribute/identification information storage means for storing thereinto said attribute and said banner advertisement identification information in relation to each other;
personal information accepting means for accepting personal information of a user using said banner advertisement viewing apparatus; and
banner advertisement forming means for forming a banner advertisement based upon banner advertisement forming information in such a manner that upon receipt of the personal information, an attribute related to said accepted personal information is extracted; banner advertisement identification information related to the extracted attribute is extracted; and said banner advertisement forming information is related to the extracted banner advertisement identification information.

8. A banner advertisement forming apparatus as claimed in claim 7 wherein:
said attribute/identification information storage means stores thereinto said attribute identification information upon receipt of information for relating said attribute to said banner advertisement identification information from a banner advertisement managing apparatus connected thereto via a network.

9. A banner advertisement forming apparatus as claimed in claim 7, or 8 wherein
said personal information accepting means prompts a user using said banner advertisement viewing apparatus to enter the personal information, and accepts the entered personal information.

10. A banner advertisement forming method executed in a banner advertisement forming apparatus to be connected via a network to a banner advertisement managing apparatus, comprising:
a banner advertisement forming information accepting process for accepting banner advertisement forming information required to form a banner advertisement from said banner advertisement managing apparatus;
a storage process for storing thereinto the accepted banner advertisement forming information;
a banner advertisement forming command accepting process for accepting a banner advertisement forming command; and
a banner advertisement forming process for forming a banner advertisement based upon the banner advertisement forming information stored in the storage means upon receipt of the banner advertisement forming command.

11. A method for forming a banner advertisement displayed on a banner advertisement viewing apparatus to be connected via a network, comprising:
a banner advertisement forming information storage process for storing thereinto banner advertisement forming information required to form the banner advertisement in relation to banner advertisement identification information used to identify said banner advertisement forming information;
a personal information/attribute storage process for storing thereinto personal information and an attribute in relation to each other;
an attribute/identification information storage process for storing thereinto said attribute and said banner advertisement identification information in relation to each other;
a personal information accepting process for accepting personal information of a user using said banner advertisement viewing apparatus; and
a banner advertisement forming process for forming a banner advertisement based upon banner advertisement forming information in such a manner that upon receipt of the personal information, an attribute related to said accepted personal information is extracted; banner advertisement identification information related to the extracted attribute is extracted; and said banner advertisement forming information is related to the extracted banner advertisement identification information.

12. A program for causing a computer to function as a banner advertisement forming apparatus to be connected via a network to a banner advertisement managing apparatus, wherein:
banner advertisement forming information accepting means for accepting banner advertisement forming information required to form a banner advertisement from said banner advertisement managing apparatus; and
storage means for storing thereinto the accepted banner advertisement forming information are constituted on said computer.

13. A program for forming a banner advertisement to be displayed on a banner advertisement viewing apparatus to be connected via a network, wherein:
banner advertisement forming information storage means for storing thereinto banner advertisement forming information required to form the banner advertisement in relation to banner advertisement identification information used to identify said banner advertisement forming information;
personal information/attribute storage means for storing thereinto personal information and an attribute in relation to each other;
attribute/identification information storage means for storing thereinto said attribute and said banner advertisement identification information in relation to each other;
personal information accepting means for accepting personal information of a user using said banner advertisement viewing apparatus; and
banner advertisement forming means for forming a banner advertisement based upon banner advertisement forming information in such a manner that upon receipt of the personal information, an attribute related to said accepted personal information is extracted; banner advertisement identification information related to the extracted attribute is extracted; and said banner advertisement forming information is related to the extracted banner advertisement identification information, are constituted on a computer.
